(19) Europäisches Patentamt
European Patent Office
Office européen des brevets

(11) EP 3 978 248 A1

(12) EUROPEAN PATENT APPLICATION
published in accordance with Art. 153(4) EPC

(43) Date of publication:
06.04.2022 Bulletin 2022/14

(21) Application number: 20815573.9

(22) Date of filing: 07.05.2020

(51) International Patent Classification (IPC):
B41J 2/01 (2006.01)    C09D 11/322 (2014.01)
B41M 5/00 (2006.01)

(52) Cooperative Patent Classification (CPC):
B41J 2/01; B41M 5/00; C09D 11/322; C09D 11/38

(86) International application number:
PCT/JP2020/018541

(87) International publication number:
WO 2020/241195 (03.12.2020 Gazette 2020/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.05.2019 JP 2019102063

(71) Applicant: Brother Kogyo Kabushiki Kaisha
Aichi 467-8561 (JP)

(72) Inventor: HAYASHIDA Kenta
Nagoya-shi, Aichi 467-8562 (JP)

(74) Representative: J A Kemp LLP
80 Turnmill Street
London EC1M 5QU (GB)

(54) AQUEOUS INK FOR INKJET RECORDING AND INKJET RECORDING METHOD

(57) A water-based ink for ink-jet recording includes: a resin-dispersed pigment; a humectant including a humectant component of which vapor pressure at 20°C is not less than 0.02hPa; resin fine particles; a surfactant; and water. A mass ratio of the humectant component in the humectant is not less than 75%; and a surface tension of the water-based ink is not more than 33mN/m. The water-based ink satisfies the following conditions (A) and (B), condition (A): 1.3 < H/(P+R) < 3 condition (B): 1 ≤ R/P. In the conditions (A) and (B): H: a content amount (% by mass) of the humectant in the wafer-based ink, P: a solid content amount (% by mass) of the resin-dispersed pigment in the water-based ink, and R: a content amount (% by mass) of the resin fine particles in the water-based ink.

FIG. 1

**Description**

TECHNICAL FIELD

The present invention relates to a water-based ink (an aqueous ink) for ink-jet recording and an ink-jet recording method.

BACKGROUND ART

In a recorded matter by the ink-jet recording, usage of a pressing means, such as a roller, etc., is suggested as a method of improving the fixing property (Patent Literature 1).

**Citation List**

[Patent Literature]

Patent Literature 1: Japanese Patent Application Laid-Open No. JP HEI03-197143

SUMMARY

**Problem to be solved by the invention:**

However, a pressing processing, by the pressing means, with respect to the recording medium after discharge of the ink makes a step of the ink-jet recording to be complex.

In view of this, an object of the present invention is to provide a water-based ink for ink-jet recording capable of improving the fixing property of the water-based ink for ink-jet recording with respect to the recording medium, without requiring any complex configuration.

**Solution to the problem:**

According to a first aspect of the present invention, there is provided a water-based ink for ink-jet recording including:

a resin-dispersed pigment;
a humectant including a humectant component of which vapor pressure at 20°C is not less than 0.02hPa;
resin fine particles;
a surfactant; and
water,
wherein a mass ratio of the humectant component in an entire amount of the humectant is not less than 75%;
a surface tension of the water-based ink is not more than 33mN/m; and
the water-based ink satisfies the following conditions (A) and (B),

$$\text{condition (A): } 1.3 < H/(P+R) < 3$$

$$\text{condition (B): } 1 \leq R/P,$$

in the conditions (A) and (B),

H: a content amount (% by mass) of the humectant in an entire amount of the wafer-based ink,
P: a solid content amount (% by mass) of the resin-dispersed pigment in the entire amount of the water-based ink, and
R: a content amount (% by mass) of the resin fine particles in the entire amount of the water-based ink.

According to a second aspect of the present invention, there is provided an ink-jet recording method, including:

discharging, to a recording medium, the water-based ink for ink-jet recording as defined in any one of claims 1 to 6 by an ink-jet system; and
fixing the water-based ink to the recording medium by using a drying mechanism which dries a discharged part of the recording medium.

**Effect of the Invention:**

The water-based ink for ink-jet recording of the present invention selects, as a colorant and a humectant, respectively, the resin-dispersed pigment and the humectant (the humectant component) of which vapor pressure at 20°C is not less than 0.02hPa (hereinafter referred to as a "specific humectant"); in the water-based ink for ink-jet recording, the content amounts of the resin-dispersed pigment, the humectant and the resin fine particles, respectively, are adjusted so as to satisfy the condition (A) and the condition (B), and the surface tension of the water-based ink is made to be not more than 33mN/m, thereby making it possible to improve the fixing property to the recording medium, without requiring any complex configuration.

BRIEF DESCRIPTION OF THE DRAWINGS

FIG. 1 is a schematic view of an example of the configuration of an ink-jet recording apparatus of the present invention.
FIG. 2 is a flow chart explaining an ink-jet recording method of the present invention.

DESCRIPTION OF THE EMBODIMENT

A water-based ink for ink-jet recording (hereinafter rerefer to as "water-based ink" or "ink" in some cases) of the present invention will be explained. The water-based ink of the present invention includes a resin-dispersed pigment (resin-dispersible pigment, resin dispersion type pigment), a humectant, resin fine particles, a surfactant and water.
The resin-dispersed pigment is dispersible in water by, for example, a resin for dispersing pigment (resin dispersant). The resin-dispersed pigment is not particularly limited, and is exemplified, for example, by carbon black, an inorganic pigment, an organic pigment, etc. The carbon black is exemplified, for example, by furnace black, lamp black, acetylene black, channel black, etc. The inorganic pigment is exemplified, for example, by titanium oxide, inorganic pigments based on iron oxide, inorganic pigments based on carbon black, etc. The organic pigment is exemplified, for example, by azo-pigments such as azo lake, insoluble azo-pigment, condensed azo-pigment, chelate azo-pigment, etc.; polycyclic pigments such as phthalocyanine pigment, perylene and perynon pigments, anthraquinone pigment, quinacridone pigment, dioxadine pigment, thioindigo pigment, isoindolinone pigment, quinophthalone pigment etc.; dye lake pigments such as basic dye type lake pigment, acid dye type lake pigment etc.; nitro pigment; nitroso pigment; aniline black daylight fluorescent pigment; and the like. Examples of resin-dispersed pigments other than those described above are exemplified, for example, by C. I. Pigment Blacks 1, 6, and 7; C. I. Pigment Yellows 1, 2, 3, 12, 13, 14, 15, 16, 17, 55, 74, 78, 150, 151, 154, 180, 185, and 194; C. I. Pigment Oranges 31 and 43; C. I. Pigment Reds 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C. I. Pigment Violets 19 and 196; C. I. Pigment Blues 1, 2, 3, 15, 15:1, 15:2, 15:3, 15:4, 16, 22, and 60; C. I. Pigment Greens 7 and 36; and a solid solution of any one of the above-described pigments; etc.
As the resin dispersant, it is allowable to use, for example, a resin dispersant including at least one of methacrylic acid and acrylic acid as a monomer; it is allowable to use, as the resin dispersant, for example, a commercially available product. The resin dispersant may further include, as the monomer, for example, styrene, vinyl chloride, etc. The commercially available product is exemplified, for example, by "JOHNCRYL (trade name) 611" (weight average molecular weight: 8100, acid value: 53 mgKOH/g), "JOHNCRYL (trade name) 60" (weight average molecular weight: 8500, acid value: 215 mgKOH/g), "JOHNCRYL (trade name) 586", "JOHNCRYL (trade name) 687", "JOHNCRYL (trade name) 63", and "JOHNCRYL (trade name) HPD296" produced by BASF CORPORATION (the former JOHNSON POLYMER L.L.C.); "Disperbyk (trade name) 190" and "Disperbyk (trade name) 191" produced by BYK ADDITIVES & INSTRUMENTS; "SOLSPERSE (trade name) 20000" and "SOLSPERSE (trade name) 27000" produced by ZENECA; and the like.
A solid content amount of the resin-dispersed pigment (pigment solid component amount (P)) in the entire amount of the water-based ink will be described later on. The pigment solid component amount (P) is the mass only of the pigment, and does not include the mass of the resin dispersant. One kind of the resin-dispersed pigment may be used singly, or two or more kinds of the resin-dispersed pigment may be used in combination.
The average particle diameter (average particle size) of the resin-dispersed pigment is, for example, in a range of 50 nm to 400 nm, in a range of 70 nm to 200 mm, or in a range of 80 nm to 100 nm. The average particle diameter can be calculated as an arithmetic average diameter. The average particle diameter of the resin-dispersed pigment can be calculated, for example, by diluting the resin-dispersed pigment so that the solid component amount is 0.02% by mass, and by performing measurement using a dynamic light scattering particle diameter distribution measuring apparatus "LB-550" manufactured by HORIBA, LTD., and with the intensity of scattered light as the reference for the particle diameter. The average particle diameter may be an average particle diameter (intensity average particle diameter) calculated from the particle diameter distribution based on the intensity (the particle diameter distribution based on the intensity of scattered light).

It is allowable that the water-based ink further contains a pigment and a dye, etc., which are different from the resin-dispersed pigment, in addition to the resin-dispersed pigment, or that the water-based ink does not further contain a pigment and a dye, etc., which are different from the resin-dispersed pigment. The colorant contained in the water-based ink may be only the resin-dispersed pigment.

The humectant prevents, for example, the ink from drying at an end part of a nozzle in an ink-jet head. The humectant includes the specific humectant (the humectant component of which vapor pressure at 20°C is not less than 0.02hPa). The specific humectant is exemplified, for example, by alkylene glycol such as propylene glycol (vapor pressure at 20°C: 0.11hPa), diethylene glycol (vapor pressure at 20°C: 0.03hPa), etc. The upper limit value of the vapor pressure at 20°C of the specific humectant is, for example, not more than 100hPa, not more than 50hPa, or not more than 20hPa. In a case that the vapor pressure at 20°C exceeds the upper limit value, there is such a fear that the original function as the humectant (suppression of the drying of the ink at the end part of the nozzle) might be lowered.

The content amount of the specific humectant in the entire amount of the water-based ink will be described later on. One kind of the specific humectant may be used singly, or two or more kinds of the specific humectant may be used in combination.

It is allowable that the humectant further contains a humectant which is different from the specific humectant, or that the humectant does not further contain a humectant which is different from the specific humectant. The humectant contained in the water-based ink may be only the specific humectant. The humectant which is different from the specific humectant is not particularly limited, and is exemplified, for example, by: glycerol, triethylene glycol, butylene glycol, dipropylene glycol, tripropylene glycol, thiodiglycol, trimethylol propane, trimethylol ethane, polyethylene glycol, polypropylene glycol, etc. One kind of the humectant may be used singly, or two or more kinds of the humectant may be used in combination.

The mass ratio of the specific humectant occupying in the entire amount of the humectant is not less than 75%. The mass ratio may be, for example, not less than 85%, not less than 90%, or 100%.

The water-based ink may further include a water-soluble organic solvent which is different from the humectant. The water-soluble organic solvent which is different from the humectant is exemplified, for example, by a penetrant which adjusts the drying velocity on the recording medium.

The penetrant is exemplified, for example, by glycol ether. The glycol ether is exemplified, for example, by ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, etc. One kind of the penetrant may be used singly, or two or more kinds of the penetrant may be used in combination.

The content amount of the penetrant in the entire amount of the water-based ink is, for example, in a range of 0% by mass to 20% by mass, in a range of 0% by mass to 15% by mass, or in a range of 1% by mass to 6% by mass.

The glass transition temperature (Tg) of the resin fine particles is, for example, in a range of -60°C to 150°C, in a range of 20°C to 100°C, or not more than 55°C. By using resin fine particles of which Tg is within the above-described range, it is possible to obtain a water-based ink which has a further excellent fixing property to the recording medium. The resin fine particles may be, for example, those included in a resin emulsion. The resin emulsion is composed, for example, of the resin fine particles and a dispersion medium (for example, water, etc.), wherein the resin fine particles are dispersed with respect to the dispersion medium with a specific particle diameter, not being in a dissolved state. The resin fine particles are exemplified, for example, by resin fine particles which are formed of: a resin based on acrylic acid, a resin based on maleate ester, a resin based on vinyl acetate, a resin based on carbonate, a resin based on styrene, a resin based on ethylene, a resin based on propylene, a resin based on urethane, and a resin of copolymer of the above-described resins, etc. One kind of the resin fine particles may be used singly, or two or more kinds of the resin fine particles may be used in combination. Among the above-described resins, the resin based on acrylic acid is preferred.

As the resin emulsion, for example, a commercially available product of resin emulsion may be used. The commercially available product of the resin emulsion is exemplified, for example, by "MOWINYL (trade name) 6969D" (emulsion based on isomeric acrylate copolymer, average particle diameter: 149 nm, Tg: 71°C), "MOWINYL (trade name) 5450" (emulsion based on isomeric styrene/acrylate copolymer, average particle diameter: 68 nm, Tg: 53°C), "MOWINYL (trade name) DM772" (Tg: 22°C) manufactured by JAPAN COATING RESIN CO., LTD.; "SUPERFLEX (trade name) 150" (resin emulsion based on urethane, average particle diameter: 30 nm, Tg: 40°C), manufactured by DKS CO., LTD (DAI-ICHI KOGYO SEIYAKU CO., LTD); and the like.

The average particle diameter of the resin fine particles is, for example, in a range of 5 nm to 500 nm, in a range of 20 nm to 300 nm, or in a range of 30 nm to 200 nm. The average particle diameter of the resin fine particles can be calculated as an arithmetic average diameter, for example, by using the dynamic light scattering particle diameter distribution measuring apparatus "LB-550" manufactured by HORIBA, LTD. The average particle diameter may be an average particle diameter (intensity average particle diameter) calculated from the particle diameter distribution based on the intensity (particle diameter distribution based on the light scattering intensity). For example, in a case that the average particle diameter of the resin-dispersed pigment and the average particle diameter of the resin fine particles are of a same extent, as will be described later on, it is possible to obtain a water-based ink which has a further excellent fixing property to the recording medium. Here, the phrase that" the average particle diameter of the resin-dispersed pigment and the average particle diameter of the resin fine particles are of a same extent" means, for example, that a ratio (dR/dP) of an average particle diameter (dR) of the fine resin particle to an average particle diameter (dP) of the resin-dispersed pigment is in a range of (dR/dP) = 0.5 to 2.0, 0.5 to 1.5, 0.67 to 1.5 or 0.8 to 1.25.

The content amount (R) of the resin fine particles in the entire amount of the water-based ink will be described later on. One kind of the resin fine particles may be used singly, or two or more kinds of the resin fine particles may be used in combination.

The water-based ink satisfies the following conditions (A) and (B).

$$\text{Condition (A): } 1.3 < H/(P+R) < 3$$

$$\text{Condition (B): } 1 \leq R/P,$$

in the conditions (A) and (B),

    H: a content amount (% by mass) of the humectant in the entire amount of the wafer-based ink,
    P: a solid content amount (% by mass) of the resin-dispersed pigment in the entire amount of the water-based ink, and
    R: a content amount (% by mass) of the resin fine particles in the entire amount of the water-based ink.

Each of the content amount (H) of the humectant, the solid content amount (P) of the resin-dispersed pigment, and the content amount (R) of the resin fine particles may be adjusted so as to satisfy the condition (A) and the condition (B), whereas the content amount (H) of the humectant is, for example, in a range of 10% by mass to 50% by mass, in a range of 15% by mass to 40% by mass, or in a range of 20% by mass to 30% by mass, the solid content amount (P) of the resin-dispersed pigment is, for example, in a range of 1% by mass to 15% by mass, in a range of 3% by mass to 10% by mass, or in a range of 5% by mass to 7% by mass, and the content amount (R) of the resin fine particles is, for example, in a range of 1% by mass to 15% by mass, in a range of 3% by mass to 10% by mass, or in a range of 5% by mass to 7% by mass.

As described above, the water-based ink for ink-jet recording of the present invention selects, as the colorant and the humectant, respectively, the resin-dispersed pigment and the specific humectant; and in the water-based ink for ink-jet recording, the content amounts of the resin-dispersed pigment, the humectant and the resin fine particles, respectively, so as to satisfy the condition (A) and the condition (B), thereby making it possible to improve the fixing property to the recording medium, without requiring any complex configuration. This mechanism is presumed, for example, as follows. Namely, in an ink-jet recording method using the water-based ink of the present invention, for example, the water-based ink is discharged or ejected from an ink discharging mechanism such as an ink-jet head, etc., droplets of the ink (ink droplets) land on the recording medium, and drying by a drying mechanism such as a heater, etc., is performed, as will be described later on. By the drying, a water content of the water-based ink is evaporated, thereby providing a state that the resin-dispersed pigment, and the resin fine particles which may function as a fixing agent (a binder resin) are dispersed in the specific humectant. In this situation, three phenomena which are (1) the ink droplets form a flat surface, while wetting and spreading on concavities and convexities on a surface of the recording medium, (2) the resin fine particles (fixing agent) are dissolved, while solidifying as being integrated with (combined with) the resin-dispersed pigment and (3) the evaporation of the specific humectant occur at a time. According to the water-based ink of the present invention, (i) since the vapor pressure at 20°C of the specific humectant is not less than 0.02 hPa, the speed of evaporation becomes appropriate, (ii) since the content amount (H) of the humectant, the solid content amount (P) of the resin-dispersed pigment and the content amount (R) of the resin fine particles satisfy the condition (A), the humectant retains (maintains) the resin-dispersed pigment and the resin fine particles in a semi-dissolved state, and (iii) since the solid content amount (P) of the resin-dispersed pigment and the content amount (R) of the resin fine particles satisfy the condition (B), the resin fine particles solidify while the resin fine particles include the resin-dispersed pigment. By the above-described (i) to (iii), the water-based ink of the present invention is considered as having an excellent fixing property to the recording medium.

Further, it is presumed that, as will be described later on, in a case that the surface tension of the water-based ink of the present invention is not more than 30 mN/m which is low, the water-based ink wets and spreads by the concavities and convexities on the surface of the recording medium, and thus has a further excellent fixing property with respect to the recording medium. Furthermore, it is presumed that, for example, in a case that the average particle diameter of the resin-dispersed pigment and the average particle diameter of the resin fine particles are of the same extent, then, for example, an arithmetic average roughness Ra of a surface of a film of the ink (ink film) is less than 0.3 μm which is small, which in turn forms an ink film having a further high flatness and smoothness, providing further excellent fixing property with respect to the recording medium. Note that, however, this mechanism is merely a presumption, and the present invention is not limited to or restricted by this. The arithmetic average roughness Ra of the surface of the ink film can be measured, for example, by a method described in Example which will be described later on.

The surfactant is exemplified, for example, by a nonionic surfactant. As the nonionic surfactant, it is allowable to use, for example, a commercially available product. The commercially available product is exemplified, for example, by "OLFIN (trade name) E1004", "OLFIN (trade name) E1006", "OLFIN (trade name) E1010", produced by NISSHIN KAGAKU KOGYO KK, etc.

The content amount of the nonionic surfactant in the entire amount of the water-based ink is, for example, in a range of 0.1% by mass to 2% by mass, in a range of 0.3% by mass to 1.5% by mass, or in a range of 0.5% by mass to 1% by mass.

Although it is allowable that the surfactant includes a surfactant which is different from the nonionic surfactant (for example, an anionic surfactant, a cationic surfactant, an amphoteric surfactant, etc.), it is also allowable to use only the nonionic surfactant as the surfactant.

The water is preferably ion-exchange water or purified water (pure water). A content amount (W) of the water in the entire amount of the water-based ink is, for example, in a range of 10% by mass to 90% by mass or in a range of 20% by mass to 80% by mass. The content amount (W) of the water may be, for example, a balance of the other components.

A mass ratio (H/W) of the content amount (H) of the humectant to the content amount (W) of the water in the entire amount of the water-based ink is, for example, in a range of H/W = 0.05 to 0.75, in a range of H/W = 0.1 to 0.65, or in a range of H/W = 0.15 to 0.55.

The water-based ink may further include a conventionally known additive, as necessary. The additive is exemplified, for example, by pH-adjusting agents, viscosity-adjusting agents, surface tension-adjusting agents, fungicides, etc. The viscosity-adjusting agents are exemplified, for example, by polyvinyl alcohol, cellulose, water-soluble resin, etc.

The water-based ink can be prepared, for example, by uniformly mixing the resin-dispersed pigment, the specific humectant, the resin fine particles, the surfactant and the water, and an optionally other additive(s) as necessary, by a conventionally known method, and then removing any non-dissolved matter with a filter, etc.

The surface tension of the water-based ink is not more than 33 mN/m. The lower limit value of the surface tension is, for example, not less than 20 mN/m, or not less than 25 mN/m.

It is preferred that the surface tension of the water-based ink is not more than 30 mN/m; and that the water-based ink satisfies the following condition (A1). As described above, in a case that the mass ratio of the specific humectant occupying in the entire amount of the humectant is not less than 85%, that the surface tension of the water-based ink is not more than 30 mN/m, and that the water-based ink satisfies the following condition (A1), it is possible to obtain a water-based ink which is further excellent in the fixing property with respect to the recording medium. The surface tension is a value which is measured, for example, at 25°C.

$$\text{Condition (A1): } 1.5 < H/(P+R) < 3$$

in the condition (A1),

H: the content amount (% by mass) of the humectant in the entire amount of the wafer-based ink,
P: the solid content amount (% by mass) of the resin-dispersed pigment in the entire amount of the water-based ink, and
R: the content amount (% by mass) of the resin fine particles in the entire amount of the water-based ink.

It is preferred that in the water-based ink, the viscosity measured at 25°C (the viscosity at 25°C) is not more than 10 mPa·s. It is considered that, in a case that the viscosity of the water-based ink is not more than 10 mPa·s, the water-based ink wets and spreads by the concavities and convexities on the surface of the recording medium, and thus has a further excellent fixing property with respect to the recording medium. The lower limit value of the viscosity of the water-based ink is, for example, not less than 2 mPa·s, or not less than 5 mPa·s.

Further, it is allowable that the water-based ink satisfies the following condition (B1). By making a ratio R/P in the condition (B1) to be not more than 1.4, it is possible to suppress any increase in the viscosity of the water-based ink, and to improve the fixing property with respect to the recording medium.

$$\text{Condition (B1): } 1 \le P/R \le 1.4$$

in the condition (B1),

> P: the solid content amount (% by mass) of the resin-dispersed pigment in the entire amount of the water-based ink, and
>
> R: the content amount (% by mass) of the resin fine particles in the entire amount of the water-based ink.

Next, explanation will be given about an ink-jet recording apparatus and an ink-jet recording method of the present invention.

The ink-jet recording apparatus of the present invention is an ink-jet recording apparatus including: an ink storing section; and an ink discharging mechanism, and configured to discharge an ink stored in the ink storing section by the ink discharge mechanism; characterized in that the water-based ink for ink-jet recording of the present invention is stored in the ink storing section. As will be described later on, the ink-jet recording apparatus of the present invention may further include a drying mechanism configured to dry a recorded part recorded with the above-described ink.

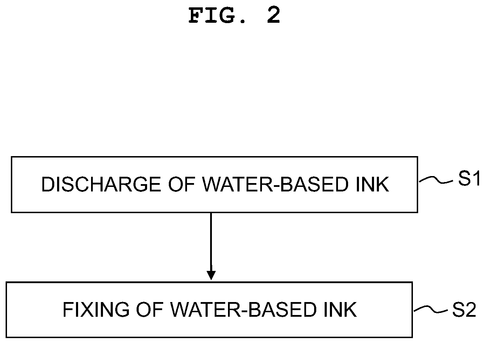

The ink-jet recording method of the present invention includes: a recording step (step S 1 of FIG. 2) of performing recording on a recording medium by discharging, to the recording medium, a water-based ink by an ink-jet system; and a fixing step (step S2 of FIG.2) of using a drying mechanism configured to dry a recorded part of the recording medium to thereby fix the water-based ink to the recording medium, characterized in that in the recording step, the ink-jet recording method uses, as the water-based ink, the water-based ink for ink-jet recording of the present invention.

In the ink-jet recording method of the present invention, the recording medium is exemplified, for example, by coated paper (coated paper sheet), etc. In the present invention, the term "coated paper" means high quality printing paper, medium quality printing paper, etc., which is plain paper having a pulp as a constituent element thereof and having a coating agent applied thereon for a purpose of improving the smoothness, whiteness, glossiness, etc.; specifically, the coated paper is exemplified by high quality coated paper, medium quality coated paper, etc. Although the water-based ink and the ink-jet recording method of the present invention are suitably usable for ink-jet recording on the coated paper, the water-based ink and the ink-jet recording method of the present invention are not limited to the recording on the coated paper; it is possible to use the water-based ink and the ink-jet recording method of the present invention for ink-jet recording with respect to a recording medium which is different from the coated paper and which includes, for example, plain paper, glossy paper, mat paper, synthetic paper, cardboard (paperboard), corrugated cardboard, film, etc.

The ink-jet recording method of the present invention can be carried out, for example, by using the ink-jet recording apparatus of the present invention. The recording includes printing a letter (text), printing an image, printing, etc.

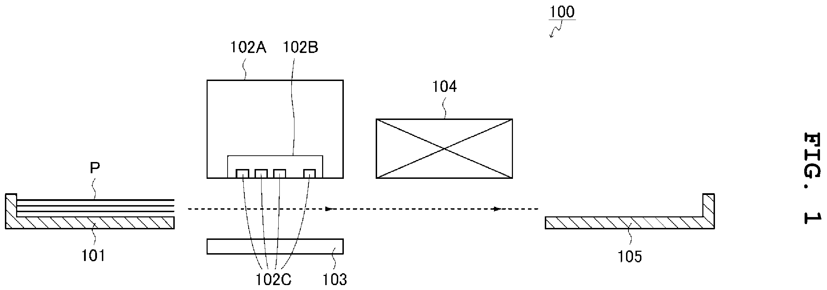

FIG. 1 is a schematic view of the configuration of an example of the ink-jet recording apparatus of the present invention. As depicted in FIG. 1, an ink-jet recording apparatus 100 includes a paper feed tray 101, a conveying mechanism such as a roller, etc. (not depicted in the drawings), recording mechanisms 102A and 102B, a platen 103, a drying mechanism 104, a paper discharge tray 105 and an ink storing section such as an ink cartridge or an ink tank, etc., (not depicted in the drawings). The paper feed tray 101 is capable of supporting a plurality of pieces of a recording medium (for example, coated paper) P which are stacked.

The recording mechanisms 102A and 102B include a carriage 102A and an ink-jet head (ink discharging mechanism) 102B. The carriage 102A is supported by two guide rails (not depicted in the drawings) which are provided to extend perpendicularly to a conveying direction in which the recording medium P is conveyed. The two guide rails are supported by a casing (not depicted in the drawings) of the ink-jet recording apparatus 100. The carriage 102A is connected to a publicly known belt mechanism (not depicted in the drawings) provided on the two guide rails. The belt mechanism is driven by a carriage motor (not depicted in the drawings). The carriage 102A connected to the belt mechanism moves reciprocally in a direction perpendicular to the conveying direction of the recording medium P, by driving of the carriage motor.

Further, four ink tubes (not depicted in the drawings) connecting the ink storing section and the ink-jet head 102B and a flexible flat cable (not depicted in the drawings) electrically connecting the ink-jet head 102B and a control substrate (not depicted in the drawings) are provided to extend from the carriage 102A. The four ink tubes supply four color water-based inks which are yellow, magenta, cyan and black inks and which are stored in the ink storing section to the ink-jet head 102B. At least one of the four color water-based inks is the water-based ink of the present invention. The flexible flat cable transmits a control signal outputted form the control substrate to the ink-jet head 102B.

As depicted in FIG. 1, the ink-jet head 102B is mounted on the carriage 102A. A plurality of nozzles 102C are formed in a lower surface of the ink-jet head 102B. Forward ends of the plurality of nozzles 102C are exposed from the carriage 102A and the lower surface of the ink-jet head 102B. The ink-jet head 102B has an actuator (not depicted in the drawings) configured to apply a force for discharging or ejecting the water-based ink(s) supplied from the ink storing section to the ink-jet head 102B via the ink tube(s). The actuator may be of any system including the piezoelectric element system, the thermal ink system, the electrostatic attraction system, etc. In a process in which the carriage 102A moves reciprocally in the direction perpendicular to the conveying direction of the recording medium P, the ink-jet head 102B discharges or ejects the water-based ink(s) as fine ink droplets from the plurality of nozzles 102C onto the recording medium P. With this, an image is recorded on the recording medium P. The plate 103 is arranged to face or to be opposite to the recording mechanism, and supports the recording medium P which is (being) conveyed from the paper feed tray 101.

The drying mechanism 104 dries the recorded part of the recording medium P. The temperature at the time of drying can be appropriately adjusted by changing the setting of the drying mechanism 104; specifically, the temperature is, for example, in a range of 20°C to 200°C or in a range of 50°C to 100°C. Further, the time of the drying (drying time) can also be appropriately adjusted by changing the setting of the drying mechanism 104; the drying time, for example, exceeds 0 seconds and is not more than 300 seconds, is in a range of 0.1 second to 60 seconds, or is in a range of 30 seconds to 60 seconds. The drying mechanism 104 may be any mechanism provided that the mechanism is capable of drying the recorded part. The drying mechanism 104 is exemplified, for example, by commercially available dryer, infrared heater, oven, belt conveyor oven, iron, hot press, etc.; the drying mechanism 104 is preferably a non-contact type drying mechanism, which is configured to dry the recorded part without making contact with the recorded part of the recording medium P, such as the dryer, infrared heater, oven, belt-conveying oven, etc.

The recording medium P for which the recording and the drying have been performed is conveyed to the paper discharge tray 105. According to the present invention, it is possible to improve the fixing property of the water-based ink for ink-jet recording with respect to the recording medium P, without requiring any complex configuration.

Next, a method of producing a recorded matter of the present invention will be explained. The method of producing the recorded matter of the present invention is a method of producing a recorded matter in which an ink film is formed on a recording medium, characterized in that the ink film is formed by the ink-jet recording method of the present invention, and that an arithmetic average roughness Ra of a surface of the ink film is less than 0.3 $\mu$m.

Next, a recorded matter of the present invention will be explained. The recorded matter of the present invention is a recorded matter in which an ink film is formed on a recording medium, characterized in that the ink film is formed by using the water-based ink for ink-jet recording of the present invention, and that an arithmetic average roughness Ra of a surface of the ink film is less than 0.3 $\mu$m. The other conditions in the method of producing the recorded matter of the present invention and in the recorded matter of the present invention are same as those in the water-based ink of the present invention and the ink-jet recording method of the present invention.

EXAMPLES

Next, Examples of the present invention are explained together with Comparative Examples. Note that the present invention is not limited to or restricted by Examples and Comparative Examples described below.

<Preparation of Pigment Dispersion Liquids A to D>

Pure water (purified water) was added to 20% by mass of a pigment (carbon black) and 7% by mass of sodium hydroxide-neutralized product of styrene-acrylic acid copolymer (acid value: 175 mgKOH/g, molecular weight: 10000) so that the entire amount thereof was 100% by mass, followed by being agitated and mixed, and thus a mixture was obtained. The obtained mixture was placed in a wet sand mill charged with zirconia beads of which diameter was 0.3 mm, and was subjected to a dispersing process for 6 (six) hours. Afterwards, the zirconia beads were removed by a separator, and the mixture was filtrated through a cellulose acetate filter (pore size 3.0 $\mu$m). Thus, pigment dispersion liquid A was obtained. Note that the styrene-acrylic acid copolymer is a water-soluble polymer which is generally used as a dispersant for pigment (pigment dispersant). Further, pigment dispersion liquids B to D indicated in TABLE 1 were obtained in a similar manner regarding the pigment dispersion liquid A, except for appropriately changing the kind of pigment, the component ratio and the duration time of dispersing process.

[Examples 1 to 14 and Comparative Examples 1 to 11]

Components, which were included in Water-based Ink Composition (TABLE 1 and TABLE 2) and which were different from the pigment dispersion liquids A to D or CAB-O-JET (trade name) 300, were mixed uniformly or homogeneously; and thus an ink solvent was obtained. Subsequently, the obtained ink solvent was added to each of the pigment dispersion liquids A to D or CAB-O-JET (trade name) 300 dispersed in water, followed by being mixed uniformly, and thus a mixture was obtained. After that, the obtained mixture was filtrated through a cellulose acetate membrane filter (pore size 3.00 μm) produced by TOYO ROSHI KAISHA, LTD., and thus a water-based ink for ink jet recording of each of Examples 1 to 14 and Comparative Examples 1 to 11 indicated in TABLE 1 and TABLE 2 was obtained.

With respect to the water-based inks of Examples 1 to 14 and Comparative Examples 1 to 11, respectively, (a) Evaluation of the fixing property to coated paper and (b) Measurement of the arithmetic average roughness Ra were performed by the following methods.

(a) Evaluation of the fixing property to coated paper

An ink-jet printer MFC-J4225N produced by BROTHER INDUSTRIES., LTD., was used so as to form an image of a single color patch on coated paper ("OK TOP COAT + (trade name)" produced by OJI PAPER CO., LTD.), by using each of the water-based inks of Examples and Comparative Examples, thereby producing an evaluation sample. Then, the evaluation sample was dried under a condition of 100°C and 60 seconds. Then, a surface of the evaluation sample was rubbed by using a cotton swab from a recorded part by the water-based ink toward a non-recorded part (blank part, blank sheet part) adjacent to the recorded part. The extent (state) of rubbing and dirtiness in each of the recorded part and the non-recorded part (blank sheet part) was confirmed by a visual inspection, and the evaluation was performed therefor in accordance with the following criterion for evaluation.

<Criterion for evaluation of fixing property to coated paper>

AA: Any rubbing was not present in the recorded part, and any dirtied portion (smudge) was not present in the non-recorded part (blank sheet part).

A: Although a trace of rubbing was present in a location, in the recorded part, at which the rubbing was performed, any dirtied portion (smudge) was not present in the non-recorded part (blank sheet part).

B: A trace of rubbing was present in a location, in the recorded part, at which the rubbing was performed, and a dirtied portion (smudge) was present in the non-recorded part (blank sheet part).

C: The ink was removed at a part, of the recorded part, at which the rubbing was performed and was transferred to the non-recorded part (blank sheet part), and thus a dirtied portion (smudge) was present in the non-recorded part (blank sheet part).

(b) Measurement of arithmetic average roughness Ra

Approximately 3 μL of the water-based ink of each of Examples 1 to 14 and Comparative Examples 1 to 11 was dripped on a slide glass ("Micro Slide Glass (trade name)" produced by MATSUNAMI GLASS IND., LTD.), by using a micropipette ("Nichipet (trade name)" produced by NICHIRYO CO., LTD.) so as to form an evaluation sample. Then, the evaluation sample was dried under a condition of 100°C and 60 seconds. Then, after the evaluation sample was cooled to the room temperature, "One Shot 3D Micro Scope (trade name) VR-3000" produced by KEYENCE CORPORATION was used so as to measure the arithmetic average roughness Ra of the surface of the ink film. The measurement was performed three times (n = 3), and the average value of the three measured values was obtained.

The water-based ink composition and the results of evaluation of each of the water-based inks of Examples 1 to 14 and Comparative Examples 1 to 11 are indicated in TABLE 1 and TABLE 2.

TABLE 1 (following) - LEGEND

*1: Dispersion liquid of carbon black (containing a resin dispersant); average particle diameter: 133 nm; numeral in the table indicates pigment solid component amount.

*2: Dispersion liquid of carbon black (containing a resin dispersant); average particle diameter: 115 nm; numeral in the table indicates pigment solid component amount.

*3: Dispersion liquid of carbon black (containing resin dispersant); average particle diameter: 100 nm; numeral in the table indicates pigment solid component amount.

*4: Dispersion liquid of carbon black (containing resin dispersant); average particle diameter: 122 nm; numeral in the table indicates pigment solid component amount.

*5: Emulsion based on isomeric acrylate copolymer, average particle diameter: 149 nm; manufactured by JAPAN COATING RESIN CO., LTD.; numeral in the table indicates effective ingredient amount (solid component amount).

*6: Emulsion based on isomeric styrene/acrylate copolymer, average particle diameter: 68 nm; manufactured by JAPAN COATING RESIN CO., LTD.; numeral in the table indicates effective ingredient amount (solid component amount).

*7: Manufactured by DAI-ICHI KOGYO SEIYAKU CO., LTD; numeral in the table indicates effective ingredient amount (solid component amount).

*8: Nonionic surfactant, manufactured by NISSHIN KAGAKU KOGYO KK; numeral in the table indicates effective ingredient amount.

TABLE 1

| | | | | EXAMPLES | | | | | | |
|---|---|---|---|---|---|---|---|---|---|---|
| | | | | 1 | 2 | 3 | 4 | 5 | 6 | 7 |
| Water-based Ink Composition (% by weight) | Colorant (P) | Pigment dispersion liquid A (*1) | | 5.00 | 5.00 | 5.00 | - | - | - | 5.00 |
| | | Pigment dispersion liquid B (*2) | | - | - | - | 5.00 | - | - | - |
| | | Pigment dispersion liquid C (*3) | | - | - | - | - | 5.00 | - | - |
| | | Pigment dispersion liquid D (*4) | | - | - | - | - | - | 5.00 | - |
| | Resin fine particles (R) | | Tg (°C) | | | | | | | |
| | | MOWINYL (trade name) 6969D (*5) | 71 | 5.00 | 7.00 | 5.00 | 5.00 | 5.00 | 5.00 | 5.00 |
| | | MOWINYL (trade name) 5450 (*6) | 53 | - | - | - | - | - | - | - |
| | | SUPERFLEX (trade name) 150 (*7) | 40 | - | - | - | - | - | - | - |
| | Humectant (H) | | Vapor Pressure | | | | | | | |
| | | Propylene glycol | 0.11 | 23.00 | 20.00 | 13.50 | 28.50 | 29.00 | 25.00 | - |
| | | Diethylene glycol | 0.02 | - | - | - | - | - | - | 23.00 |
| | | Glycerol | <0.01 | - | - | - | - | - | - | - |
| | Penetrant | Triethylene glycol-n-butyl ether | | 3.00 | 3.00 | 3.00 | 3.00 | 3.00 | 3.00 | 3.00 |
| | Surfactant | OLFIN (trade name) E1004 (*8) | | 1.00 | 1.00 | 1.00 | 1.00 | 1.00 | 1.00 | 1.00 |
| | Water | | | balance | balance | balance | balance | balance | balance | balance |
| Mass ratio (%) of specific humectant occupying in the entire amount of humectant | | | | 100 | 100 | 100 | 100 | 100 | 100 | 100 |
| H / (P+R) | | | | 2.30 | 1.67 | 1.35 | 2.85 | 2.90 | 2.50 | 2.30 |
| R/P | | | | 1.00 | 1.40 | 1.00 | 1.00 | 1.00 | 1.00 | 1.00 |
| Surface tension (25°C) (mN/m) | | | | 30.0 | 29.8 | 29.0 | 30.0 | 32.4 | 32.4 | 29.4 |
| Viscosity (25°C) (mPa·s) | | | | 6.26 | 6.24 | 4.22 | 6.14 | 6.38 | 6.39 | 5.39 |
| Fixing property with respect to coated paper | | | | AA | AA | A | AA | A | A | AA |
| Arithmetic average roughness (Ra) (μm) | | | | 0.23 | 0.17 | 0.19 | 0.19 | 0.19 | 0.19 | 0.26 |

TABLE 1 (continued)

| | | | | EXAMPLES | | | | | | |
|---|---|---|---|---|---|---|---|---|---|---|
| | | | | 8 | 9 | 10 | 11 | 12 | 13 | 14 |
| Water-based Ink Composition (% by weight) | Colorant (P) | Pigment dispersion liquid A (*1) | | 5.00 | 5.00 | 5.00 | 5.00 | 5.00 | 5.00 | 5.00 |
| | | Pigment dispersion liquid B (*2) | | - | - | - | - | - | - | - |
| | | Pigment dispersion liquid C (*3) | | - | - | - | - | - | - | - |
| | | Pigment dispersion liquid D (*4) | | - | - | - | - | - | - | - |
| | Resin fine particles (R) | | Tg (°C) | | | | | | | |
| | | MOWINYL (trade name) 6969D (*5) | 71 | - | - | - | 5.00 | 5.00 | 5.00 | - |
| | | MOWINYL (trade name) 5450 (*6) | 53 | 5.00 | 5.00 | 7.00 | - | - | - | - |
| | | SUPERFLEX (trade name) 150 (*7) | 40 | - | - | - | - | - | - | 5.00 |
| | Humectant (H) | | Vapor Pressure | | | | | | | |
| | | Propylene glycol | 0.11 | 23.00 | 13.50 | 20.00 | 20.70 | 19.55 | 18.40 | 23.00 |
| | | Diethylene glycol | 0.02 | - | - | - | - | - | - | - |
| | | Glycerol | <0.01 | - | - | - | 2.30 | 3.45 | 4.60 | - |
| | Penetrant | Triethylene glycol-n-butyl ether | | 3.00 | 3.00 | 3.00 | 3.00 | 3.00 | 3.00 | 3.00 |
| | Surfactant | OLFIN (trade name) E1004 (*8) | | 1.00 | 1.00 | 1.00 | 1.00 | 1.00 | 1.00 | 1.00 |
| | Water | | | balance | balance | balance | balance | balance | balance | balance |
| Mass ratio (%) of specific humectant occupying in the entire amount of humectant | | | | 100 | 100 | 100 | 90 | 85 | 80 | 100 |
| H / (P+R) | | | | 2.30 | 1.35 | 1.67 | 2.30 | 2.30 | 2.30 | 2.30 |
| R/P | | | | 1.00 | 1.00 | 1.40 | 1.00 | 1.00 | 1.00 | 1.00 |
| Surface tension (25°C) (mN/m) | | | | 31.0 | 30.4 | 31.5 | 29.2 | 29.4 | 29.7 | 31.2 |
| Viscosity (25°C) (mPa·s) | | | | 5.91 | 3.77 | 5.82 | 5.99 | 5.99 | 5.98 | 7.12 |
| Fixing property with respect to coated paper | | | | AA | AA | AA | AA | AA | A | AA |
| Arithmetic average roughness (Ra) (μm) | | | | 0.21 | 0.27 | 0.22 | 0.21 | 0.21 | 0.19 | 1.15 |

TABLE 2 (following) - LEGEND

*1: Dispersion liquid of carbon black (containing a resin dispersant); average particle diameter: 133 nm; numeral in the table indicates pigment solid component amount.

*9: Self-dispersible pigment; produced by CABOT CORPORATION; numeral in the table indicates pigment solid component amount.

*5: Emulsion based on isomeric acrylate copolymer, average particle diameter: 149 nm; manufactured by JAPAN COATING RESIN CO., LTD.; numeral in the table indicates effective ingredient amount (solid component amount).

*8: Nonionic surfactant, manufactured by NISSHIN KAGAKU KOGYO KK; numeral in the table indicates effective ingredient amount.

TABLE 2

| | | | | COMPARATIVE EXAMPLES | | | | | |
|---|---|---|---|---|---|---|---|---|---|
| | | | | 1 | 2 | 3 | 4 | 5 | 6 |
| Water-based Ink Composition (% by weight) | Colorant (P) | Pigment dispersion liquid A (*1) | | - | 5.00 | 5.00 | 5.00 | 5.00 | 5.00 |
| | | CAB-O-JET (trade name) 300 (*9) | | 5.00 | - | - | - | - | - |
| | Resin fine particles (R) | | Tg (°C) | | | | | | |
| | | MOWINYL (trade name) 6969D (*5) | 71 | 5.00 | 5.00 | 5.00 | 5.00 | 5.00 | 5.00 |
| | Humectant (H) | | Vapor Pressure | | | | | | |
| | | Propylene glycol | 0.11 | 23.00 | - | - | - | - | 12.50 |
| | | Glycerol | <0.01 | - | 23.00 | - | - | - | - |
| | | Polyethylene glycol #200 | <0.01 | - | - | 23.00 | - | - | - |
| | | 1,6-hexanediol | <0.01 | - | - | - | 23.00 | - | - |
| | Penetrant | Triethylene glycol-n-butyl ether | | 3.00 | 3.00 | 3.00 | 3.00 | 3.00 | 3.00 |
| | Surfactant | OLFIN (trade name) E1004 (*8) | | 1.00 | 1.00 | 1.00 | 1.00 | 1.00 | 1.00 |
| | Water | | | balance | balance | balance | balance | balance | balance |
| Mass ratio (%) of specific humectant occupying in the entire amount of humectant | | | | 100 | 0 | 0 | 0 | 0 | 100 |
| H / (P+R) | | | | 2.30 | 2.30 | 2.30 | 2.30 | 0 | 1.25 |
| R/P | | | | 1.00 | 1.00 | 1.00 | 1.00 | 1.00 | 1.00 |
| Surface tension (25°C) (mN/m) | | | | 29.0 | 29.0 | 29.4 | 36.1 | 32.6 | 29.0 |
| Viscosity (25°C) (mPa·s) | | | | 6.15 | 6.39 | 6.48 | 6.56 | 2.49 | 3.93 |
| Fixing property with respect to coated paper | | | | B | C | C | C | C | B |
| Arithmetic average roughness (Ra) (μm) | | | | 0.18 | 0.40 | 0.44 | 4.59 | 8.40 | 0.20 |

TABLE 2 (continued)

| | | | COMPARATIVE EXAMPLES | | | | |
|---|---|---|---|---|---|---|---|
| | | | 7 | 8 | 9 | 10 | 11 |
| Water-based Ink Composition (% by weight) | Colorant (P) | Pigment dispersion liquid A (*1) | 5.00 | 5.00 | 5.00 | 5.00 | 5.00 |
| | | CAB-O-JET (trade name) 300 (*9) | - | - | - | - | - |
| | Resin fine particles (R) | | Tg (°C) | | | | |
| | | MOWINYL (trade name) 6969D (*5) | 71 | 7.00 | 3.00 | - | 5.00 | 5.00 |
| | Humectant (H) | | Vapor Pressure | | | | |
| | | Propylene glycol | 0.11 | 9.50 | 27.00 | 23.00 | 23.00 | 16.10 |
| | | Glycerol | <0.01 | - | - | - | - | 6.90 |
| | | Polyethylene glycol #200 | <0.01 | - | - | - | - | - |
| | | 1,6-hexanediol | <0.01 | - | - | - | - | - |
| | Penetrant | Triethylene glycol-n-butyl ether | | 3.00 | 3.00 | 3.00 | 3.00 | 3.00 |
| | Surfactant | OLFIN (trade name) E1004 (*8) | | 1.00 | 1.00 | 1.00 | - | 1.00 |
| | Water | | | balance | balance | balance | balance | balance |
| Mass ratio (%) of specific humectant occupying in the entire amount of humectant | | | | 100 | 100 | 100 | 100 | 70 |
| H / (P+R) | | | | 0.79 | 3.38 | 4.60 | 2.30 | 2.30 |
| R/P | | | | 1.40 | 0.60 | 0 | 1.00 | 1.00 |
| Surface tension (25°C) (mN/m) | | | | 29.2 | 30.0 | 30.6 | 42.2 | 29.0 |
| Viscosity (25°C) (mPa·s) | | | | 4.02 | 6.13 | 5.30 | 5.46 | 5.97 |
| Fixing property with respect to coated paper | | | | B | B | C | B | B |
| Arithmetic average roughness (Ra) (μm) | | | | 0.20 | 0.52 | 2.36 | 4.68 | 0.31 |

As indicated in TABLE 1, in Examples 1 to 14, the result of evaluation of fixing property to the coated paper was satisfactory. Further, Examples 1 to 13, in each of which the ratio (dR/dP) of the average particle diameter of the resin fine particles (dR) to the average particle diameter of the resin-dispersed pigment (dP) was in a range of (dR/dP) = 0.5 to 2.0, the arithmetic average roughness Ra was less than 0.3 μm and the smoothness was high, as compared with Example 14 in which the ratio (dR/dP) was in a range of (dR/dP) = 30/133 =0.23.

Further, Examples 1 and 11 to 13 of which conditions were similar to one another except for the difference in the mass ratio of the specific humectant occupying in the entire amount of the humectant will be compared to one another. In Examples 1, 11 and 12 in which the mass ratio of the specific humectant occupying in the entire amount of the humectant was not less than 85% had further satisfactory result in the evaluation of the fixing property to the coated paper than that in Example 13 in which the mass ratio of the specific humectant occupying in the entire amount of the humectant was less than 85%.

Examples 1 to 7 which used the same resin fine particles will be compared to one another. In Examples 1, 2, 4 and 7 in which H/(P+R)>1.5 was held and thus satisfied the condition (A1) and the surface tension of the water-based ink was not more than 30 mN/m had further satisfactory result in the evaluation of the fixing property to the coated paper than that in Example 3 in which H/(P+R)< 1.5 was held and thus not satisfied the condition (A1) and than that in Examples 5 and 6 in each of which the surface tension of the water-based ink exceeded 30 mN/m.

On the other hand, Comparative Example 1 which used the self-dispersible pigment, instead of using the resin-dispersed pigment, had an unsatisfactory result in the evaluation of the fixing property to the coated paper. Further, each of Comparative Examples 2 to 4 using the humectant of which vapor pressure at 20°C was less than 0.01 hPa, instead of using the specific humectant, also had an unsatisfactory result in the evaluation of the fixing property to the coated paper. Furthermore, Comparative Example 5 which did not use the humectant also had an unsatisfactory result in the evaluation of the fixing property to the coated paper. Moreover, each of Comparative Examples 6 and 7 in which H/(P+R)<1.3 and thus not satisfying the condition (A) also had an unsatisfactory result in the evaluation of the fixing property to the coated paper. Further, each of Comparative Examples 8 and 9 in which H/(P+R)>3 and R/P <1 were held and thus not satisfying the condition (A) and the condition (B) also had an unsatisfactory result in the evaluation of the fixing property to the coated paper. Furthermore, Comparative Example 10 which did not use the surfactant also had an unsatisfactory result in the evaluation of the fixing property to the coated paper. Moreover, Comparative Example 11 in which the mass ratio of the specific humectant occupying in the entire amount of the humectant was less than 75% also had an unsatisfactory result in the evaluation of the fixing property to the coated paper.

INDUSTRIAL APPLICABILITY

As described above, the water-based ink of the present invention has the excellent fixing property to the recording medium. The water-based ink of the present invention is widely applicable to the ink-jet recording with respect to various kinds of recording media, such as plain paper, glossy paper, mat paper, etc., in addition to the ink-jet recording with respect to the coated paper.

**Reference Signs List**

| | |
|---|---|
| 100 | ink-jet recording apparatus |
| 101 | paper feed tray |
| 102A | carriage |
| 102B | ink-jet head (ink discharging mechanism) |
| 102c | nozzle |
| 103 | platen |
| 104 | drying mechanism |
| 105 | paper discharge tray |

**Claims**

1. A water-based ink for ink-jet recording comprising:

a resin-dispersed pigment;
a humectant including a humectant component of which vapor pressure at 20°C is not less than 0.02hPa;
resin fine particles;
a surfactant; and
water,
wherein a mass ratio of the humectant component in an entire amount of the humectant is not less than 75%;
a surface tension of the water-based ink is not more than 33mN/m; and
the water-based ink satisfies the following conditions (A) and (B),

condition (A): $1.3 < H/(P+R) < 3$

condition (B): $1 \leq R/P$,

in the conditions (A) and (B),

H: a content amount (% by mass) of the humectant in an entire amount of the wafer-based ink,
P: a solid content amount (% by mass) of the resin-dispersed pigment in the entire amount of the water-based ink, and
R: a content amount (% by mass) of the resin fine particles in the entire amount of the water-based ink.

2. The water-based ink for ink-jet recording according to claim 1, wherein the mass ratio of the humectant component, of which vapor pressure at 20°C is not less than 0.02hPa, in the entire amount of the humectant is not less than 85%;

the surface tension is not more than 30mN/m; and
the water-based ink satisfies the following condition (A1),

condition (A1): $1.5 < H/(P+R) < 3$

in the condition (A1):

H: the content amount (% by mass) of the humectant in the entire amount of the wafer-based ink,
P: the solid content amount (% by mass) of the resin-dispersed pigment in the entire amount of the water-based ink, and
R: the content amount (% by mass) of the resin fine particles in the entire amount of the water-based ink.

3. The water-based ink for ink-jet recording according to claim 1 or 2, wherein a glass transition temperature of the resin fine particles is not more than 55 °C.

4. The water-based ink for ink-jet recording according to any one of claims 1 to 3, wherein the humectant component, of which vapor pressure at 20°C is not less than 0.02hPa, is at least one of propylene glycol and diethylene glycol.

5. The water-based ink for ink-jet recording according to any one of claims 1 to 4, wherein the surfactant includes a nonionic surfactant.

6. The water-based ink for ink-jet recording according to any one of claims 1 to 5, wherein a viscosity at 25°C of the water-based ink for ink-jet recording is not more than 10 mPa·s.

7. An ink-jet recording method, comprising:

discharging, to a recording medium, the water-based ink for ink-jet recording as defined in any one of claims 1 to 6 by an ink-jet system; and
fixing the water-based ink to the recording medium by using a drying mechanism which dries a discharged part of the recording medium.

8. The ink-jet recording method according to claim 7, wherein the recording medium is coated paper.

# FIG. 1

100

104

105

102A 102B

102C

103

P

101

FIG. 2

DISCHARGE OF WATER-BASED INK | S1

FIXING OF WATER-BASED INK | S2

## INTERNATIONAL SEARCH REPORT

| International application No. |
| --- |
| PCT/JP2020/018541 |

### A. CLASSIFICATION OF SUBJECT MATTER
Int.Cl. B41J2/01(2006.01)i, C09D11/322(2014.01)i, B41M5/00(2006.01)i
FI: C09D11/322, B41J2/01501, B41J2/01125, B41M5/00120, B41M5/00100

According to International Patent Classification (IPC) or to both national classification and IPC

### B. FIELDS SEARCHED
Minimum documentation searched (classification system followed by classification symbols)
Int.Cl. B41J2/01, C09D11/322, B41M5/00

Documentation searched other than minimum documentation to the extent that such documents are included in the fields searched
    Published examined utility model applications of Japan    1922-1996
    Published unexamined utility model applications of Japan    1971-2020
    Registered utility model specifications of Japan    1996-2020
    Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-52804 A (SEIKO EPSON CORPORATION)<br>19.02.2002 (2002-02-19), claims, paragraph [0016],<br>examples 1, 2 | 1-8<br>1-8 |
| X<br>Y<br>A | WO 2017/138439 A1 (KAO CORPORATION) 17.08.2017<br>(2017-08-17), claims, paragraphs [0026]-[0028],<br>examples 1-4 | 1-2, 4-7<br>3<br>8 |
| X<br>Y | JP 2015-48466 A (KAO CORPORATION) 16.03.2015<br>(2015-03-16), claims, paragraphs [0005], [0040],<br>[0041], [0044], examples 1, 2 | 1, 4-8<br>2-3 |
| X<br>Y | WO 2016/181797 A1 (KAO CORPORATION) 17.11.2016<br>(2016-11-17), claims, paragraphs [0009], [0013],<br>[0053], [0065], [0067], examples 1-21 | 1-8<br>1-8 |

☒ Further documents are listed in the continuation of Box C.     ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 10.07.2020 | 21.07.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2020/018541

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2019-59844 A (BROTHER INDUSTRIES, LTD.) 18.04.2019 (2019-04-18), claims, paragraphs [0005], [0017], examples 1-9 | 1-8<br>1-8 |
| X<br>Y | WO 2015/147192 A1 (NIPPON KAYAKU CO., LTD.) 01.10.2015 (2015-10-01), claims, paragraphs [0008], [0021], [0030], examples 1-4 | 1-8<br>1-8 |
| X | JP 2015-137318 A (SAKATA INX CORPORATION) 30.07.2015 (2015-07-30), claims, paragraphs [0015], [0025], [0031], examples 1-9 | 1-8 |
| Y | WO 2018/151219 A1 (KAO CORPORATION) 23.08.2018 (2018-08-23), paragraph [0041] | 1-8 |
| P, X | JP 2020-63405 A (KAO CORPORATION) 23.04.2020 (2020-04-23), claims, examples 1-11 | 1-8 |
| P, X | JP 2020-55943 A (SAKATA INX CORPORATION) 09.04.2020 (2020-04-09), claims, examples 1-15 | 1-8 |

Form PCT/ISA/210 (second sheet) (January 2015)

| | | |
|---|---|---|
| JP 2002-52804 A | 19.02.2002 | (Family: none) |
| WO 2017/138439 A1 | 17.08.2017 | US 2019/0039384 A1<br>claims, paragraphs [0069]-[0077],<br>examples 1-4<br>EP 3415334 A1<br>CN 108698421 A |
| JP 2015-48466 A | 16.03.2015 | (Family: none) |
| WO 2016/181797 A1 | 17.11.2016 | US 2018/0142110 A1<br>claims, paragraphs [0017], [0042],<br>[0135], [0174], [0206],<br>[0208], examples 1-21<br>EP 3275949 A1<br>CN 107532025 A |
| JP 2019-59844 A | 18.04.2019 | US 2019/0092954 A1<br>claims, paragraphs [0005], [0027],<br>examples 1-9 |
| WO 2015/147192 A1 | 01.10.2015 | US 2017/0137647 A1<br>claims, paragraphs [0010], [0067],<br>[0082], examples 1-4<br>EP 3112429 A1 |
| JP 2015-137318 A | 30.07.2015 | US 2017/0002216 A1<br>claims, paragraphs [0024], [0044],<br>[0056], examples 1-9<br>EP 3098272 A1<br>CN 105916948 A |
| WO 2018/151219 A1 | 23.08.2018 | US 2019/0375225 A1<br>paragraph [0135]<br>EP 3584084 A1<br>CN 110267821 A |
| JP 2020-63405 A | 23.04.2020 | (Family: none) |
| JP 2020-55943 A | 09.04.2020 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI03197143 B